# EUROPEAN PATENT APPLICATION

(11) **EP 3 006 807 A1**
(43) Date of publication of application: **13.04.2016**
(21) Application number: 14187821.5
(22) Date of filing: 06.10.2014
(51) Int. Cl.: F16P 1/06, G02B 5/24

(54) **Laser protective wall**

(71) Applicant: Technische Universität München, 80333 München (DE)
(72) Inventor: Lugauer, Florian Peter, DE - 85386 Eching (DE); Einsank, Willi Thomas, DE - 81375 München (DE)
(74) Representative: FDST Patentanwälte

(57) **Abstract**

A laser protective wall (1, 20) with a layer sequence (3) oriented along a longitudinal direction (7) is provided. The layer sequence (3) comprises a transmission layer (9) on the entry side, followed by an absorption layer (10) and a reflection layer (11), wherein the absorption layer (10) is formed of a flowing liquid during operation.

## Description

The invention relates to a laser protective wall as a protection against laser beams, in particular for the case that intensities are applied at the wrong time and/or at the wrong place by an operator's error or a malfunction of a laser source in an industrial production process. In particular, the laser protective wall shall also ensure that an unintended exposure of persons and environment to laser light above a maximally admissible exposure is safely prevented during an industrial production process.

Material machining by means of laser irradiation offers the possibility of feeding energy with high spatial and temporal precision with short clock intervals and, at the same time, short machining times. Therefore, the demand for installations for material machining by means of laser irradiation has been increasing for years. Due to new findings in science and development, new radiation sources for industrial material machining keep arising, whose output powers have been increasing in an exponential manner since the turn of the millennium. Not only the output power, but also the radiation quality of the laser sources used in industry has significantly improved since the turn of the millennium, with the consequence that at present, laser sources are available which are able to produce powers of several 10,000 watts (10 kW) on an area of a few square millimeters.

In addition to the radiation sources themselves, the system technology for material machining has been advanced, too. While in the beginning, one worked with free beams, industrial installations were being built step by step, which possess a fiber coupling, so that it became possible to feed laser light to the workpiece through flexible glass fibers. Meanwhile, it is possible to apply a considerable power density at any spot in space by means of six-axis industrial robots when using suitable radiation sources and fiber guidances. The use of deflection optics additionally increases the flexibility. Meanwhile it is also possible to position the focal spot of a laser beam extremely quickly at a desired place by means of so-called laser scanners.

The above-mentioned technical development allows for new manufacturing processes, such as, for example, industrially relevant remote laser cutting methods like Remote Fusion Cutting (RFC) or Remote Ablation Cutting (RAC), with large machining distances. However, the possibility to apply a high power density within a short time at any place also increases the hazard potential of such installations. If the intensity of a laser source is applied at a wrong time and/or at a wrong place, this might lead to damages to objects and machines. At the same time, however, it entails a considerable risk for the persons present in the area of the laser beam. If, for example, a laser beam of a radiation source of laser class 4, which is the usual class of material-machining lasers, hits the human eye, the organ of vision of that person generally will be irreversibly injured. In this case the danger is particularly great, because most of the material-machining lasers used nowadays emit light in the near infrared range. Light of this wavelength is invisible for humans, but penetrates the eye up to the retina and damages it directly. As to an interaction of the laser beam with another part of the body, the laser beam will not be focused by the lens of the eye, but the intensities of the radiation sources industrially used nowadays are so high that even in this case, thermal injuries might occur.

Conventionally, the demand for technical protective measures is realized by means of passive protective walls at present. Such laser protective walls offer protection by absorption of the laser irradiation due to the physical properties of the material of which the walls are made. As a rule, hollow-chamber walls made of steel are used. It has turned out, however, that already as from a laser power of 4 kW, such protective walls arranged at a distance from the laser source equivalent to the focus length mostly do not offer a sufficient protective effect. Therefore, it is necessary to continuously monitor the installation when modern high-performance lasers are used as laser sources. This situation is unsatisfactory from the point of view of the operators of the installations, because of the high monetary and personnel expenditure. Furthermore, this situation is also critical in terms of safety, because according to safety research, humans are considered as far less reliable than the corresponding technology.

To solve these problems, active protective walls are increasingly used at present. These comprise a passive protective wall and sensor means suitable for detecting radiation. The sensor means are usually integrated within the protective wall. A misdirected laser beam is detected in different manners, for example by means of optical sensors, thermal sensors (e.g. thermistors) or gas detectors.

However, active protective walls are rather expensive. Furthermore, a high effort of training is required. In addition, false positive indications of such protective walls often cause problems, because they lead to production stops and expensive troubleshooting. Furthermore, damaged active protective walls often have to be repaired cost-intensively and time-consumingly, once they have been activated.

An alternative solution could be achieved by increasing the distance of the laser source or the emitting optics from passive laser protective walls such that the intensity hitting the protective wall does not lead to any considerable damage. For high-performance lasers, however, this distance amounts to several meters. With increasing distance, the area to be covered by a protective wall increases disproportionately, entailing intolerable costs caused by higher material and space requirements.

The invention is based on the problem to provide a laser protective wall which is as simple and inexpensive as possible, while offering an efficient protection against laser beams of high intensities or power densities.

According to the invention, this problem is solved by a laser protective wall with a layer sequence oriented along a longitudinal direction, comprising a transmission layer on the entry side, followed by an absorption layer and a reflection layer, wherein the absorption layer is formed of a flowing liquid during operation.

This laser protective wall provides a system which offers a permanent protection against laser irradiation, avoiding, at the same time, the disadvantages of active systems. The terms "transmission layer", "absorption layer" and "reflection layer" are to be understood as referred to the particular emission spectrum of the laser source. In particular, in the near infrared range, i.e. between 800 nm and 3 µm, the corresponding layers possess a very high degree of transmission, absorption and reflection, respectively.

The entry-side transmission layer has the function to transmit the laser light as completely as possible, so that this layer itself absorbs only little heat. The following absorption layer is the main absorbing medium of the system. Its absorptivity is adapted to the wave length of the laser irradiation to be shielded, in particular by a suitable choice of the material the absorption layer is made of. The reflection layer has the function to reflect any laser irradiation still penetrating the absorptive layer back into the latter for renewed absorption.

To compensate the high deposition of heat within the absorption layer, the absorption layer is formed of a flowing liquid during operation. Due to an active flow, the heat is transported away from the region where the laser irradiation hits the absorption layer and can be removed from the liquid outside the layer sequence, for example by means of a suitable heat exchanger or cooling element. Also a large liquid tank could be used as a heat-sink to remove heat from the laser protective wall. Preferably, the flow is continually maintained during operation or is at least provided discontinually at regular time intervals. The flow is either generated actively by a suitable fluid flow engine or achieved by a fluidic coupling to a corresponding pressure line. It is also possible to use gravitation for the generation of flow, for example by using a high-level tank.

By choice of materials and by the thickness of the individual layers, the laser protective wall can be easily adapted to the intended scenario of use. For example, the thickness of the absorption layer can be increased in longitudinal direction in case of using an absorptive material characterized by a low absorptivity. If the absorptivity of the liquid is reduced, the heat resulting from absorption of the laser irradiation is not transferred to the liquid immediately behind the transmission layer, but is distributed over the latter's spatial depth. Insofar, the transmission layer is subjected to a lower thermal stress. The thickness of the transmission layer and of the reflection layer can be adapted accordingly.

In one embodiment of the invention, the reflection layer is advantageously designed as a hollow profile. In this way, it is safely prevented that the reflection layer is penetrated by non-absorbed laser irradiation. On the other hand, the used liquid itself can be provided with a high absorptivity. This is achieved, for example, by choosing a suitable liquid or by choosing suitable absorption additives admixed to the liquid.

In a preferred embodiment of the invention, viewed in longitudinal direction, the transmission layer and the reflection layer form a front boarder wall and a rear boarder wall, respectively, for the flowing liquid. In this way, a container is formed through which said liquid can flow.

In another embodiment of the invention, a pump for generating a flow of or within the liquid is further comprised.

In yet another preferred embodiment of the invention, means for cooling the liquid are further comprised. Particularly, at least one heat exchanger and/or at least one active and/or passive cooling element is provided. In this case, the heat can be dissipated to a liquid cooling medium or to a gaseous cooling medium, in particular to air.

In one embodiment of the invention, the liquid is guided within a circulation. For example, if water is used as the liquid and as far as a suitable pipeline is available, it is also possible to connect the laser protective wall to a liquid conduit in throughflow.

In a preferred embodiment of the invention, viewed in longitudinal direction, a sacrificial layer is arranged in front of the transmission layer. This sacrificial layer, which is arranged on the side of the transmission layer facing towards the laser, will be destroyed when hit by laser irradiation, thus uncovering the transmission layer. The sacrificial layer avoids deposition of impurity directly on the transmission layer, which might lead to a locally increased absorption, so that the function of the transmission layer would no longer be given. Impurity especially caused by external influences will rather deposit on the sacrificial layer, but the latter will be immediately destroyed as soon as it is hit by the laser light.

In a preferred embodiment of the invention the sacrificial layer is capable of burning down without residues when hit by laser irradiation. No ashes are produced, which would undesirably lead to an increased absorption of laser light at the transmission layer. Preferably, the sacrificial layer is made of a flame-retarding material, or flame-retarding additives are added to the material of the sacrificial layer.

In another embodiment of the invention, the sacrificial layer is spaced apart from the transmission layer. In this way, the transmission layer itself is accessible, for example for maintenance or repair. Also, any residues from the sacrificial layer are kept away from the transmission layer.

In a preferred embodiment of the invention, viewed in longitudinal direction, a cooling layer formed of a flowing liquid during operation is arranged behind the reflection layer. By providing a cooling layer the overall cooling efficiency of the laser protective wall will be improved. A liquid cooling layer arranged behind the reflection layer increases heat-dissipation from the reflection layer, which partly may absorb laser irradiation. From this point of view, it is possible to reduce the absorptivity of the liquid, too. Indeed this might lead to an increased heating up of the reflection layer by impinging laser beams, but the additional heat can be efficiently dissipated by the cooling layer arranged adjacently to the reflection layer.

In another embodiment of the invention, the absorption layer and the cooling layer are formed of liquids flowing in the same direction during operation.

In yet another embodiment of the invention, the absorption layer and the cooling layer are formed of liquids flowing in opposite directions during operation.

In yet another embodiment of the invention, the same liquid, in particular water, is used for forming the absorption layer and the cooling layer during operation.

In a preferred embodiment of the invention, the liquid forming the absorption layer and the cooling layer is guided within a common circulation.

In another embodiment of the invention, viewed in longitudinal direction, a boarder layer, in particular a reflective boarder layer, is arranged behind the cooling layer. When indicated, this boarder layer is constructed thermally insulating, particularly to fulfil DIN EN ISO 13732-1. Due to the upstream double flow layer and the reflective layer arranged therebetween, it is, however, almost absolutely guaranteed that no laser light will impinge on the reflective border layer. Insofar, the reflective border layer can be of a relatively thin design in this case.

In yet another preferred embodiment of the invention, the reflection layer is microstructured on its front side facing towards the laser source, in order to increase its diffusion capacity. By the increased diffusion capacity, impinging laser light is diffusely scattered into the absorptive liquid. This minimizes the risk of a back reflection of laser light in the direction of the laser source. Providing a microstructuring on the front side of the reflection layer leads, furthermore, to an improved heat transfer to the flowing liquid.

In one embodiment of the invention in the absorption layer and/or in the cooling layer water is used as liquid. Water possesses a sufficiently high absorptivity, in particular in the near infrared range.

In another preferred embodiment of the invention, an additive, in particular an absorptive additive or a mixture of such absorptive additives adapted to the wave length of the laser source can be admixed to the water. For infrared irradiation, an additive may be, for example, iron oxide.

In one embodiment of the invention, a metal plate, in particular an aluminium plate, is used as reflection layer. Aluminium possesses a very high reflectivity from the ultraviolet up to the infrared spectral region.

In a preferred embodiment of the invention, a quartz glass is used as transmission layer.

In one embodiment of the invention, the sacrificial layer consists of paper or molleton

Some exemplary embodiments of the invention are explained in more detail by means of the following drawings, wherein
- Fig. 1: shows a schematic view of a laser protective wall with a layer sequence according to a first embodiment,
- Fig. 2: shows a schematic view of a laser protective wall with a layer sequence according to a second embodiment,
- Fig.3: shows a schematic view of a laser protective wall with a layer sequence according to a third embodiment,
- Fig.4: shows a schematic view of a laser protective wall with a layer sequence according to a fourth embodiment and
- Fig.5: shows a schematic view of a laser protective wall with a layer sequence according to a fifth embodiment.

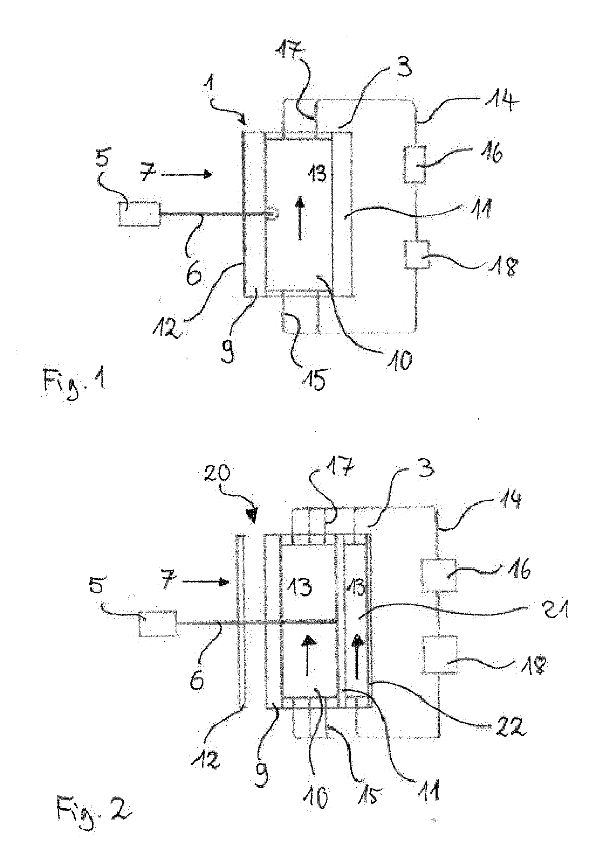

Fig.1 shows a schematic cross-section of a laser protective wall 1 with a layer sequence 3. In operation, the laser protective wall 1 with the layer sequence 3 may be positioned relative to a laser source 5 in the orientation shown. According to this embodiment the longitudinal direction 7 of the layer sequence 3 is oriented parallel to the direction of the laser beams. However, the laser protective wall 1 could be aligned in any orientation relative to the laser source 5 and can also be utilized to protect against scattered radiation.

The layer sequence 3 of the laser protective wall 1 comprises, in the order shown, an entry-side transmission layer 9, followed by an absorption layer 10 and a reflection layer 11. A sacrificial layer 12 is applied on the side of the transmission layer 9 facing towards the laser source 5.

The absorption layer 10 is formed by a liquid 13 flowing through the layer sequence 3 in the direction shown during operation. To generate the flow, a pump 16 is arranged between the inlet 15 and the outlet 17 for the liquid 13. To generate a high flow rate, both the inlet 15 and the outlet 17 are of a double-flow design.

Impinging laser irradiation 6 penetrates the transmission layer 9 almost unhindered. The sacrificial layer 12 inclusive of any impurity deposited thereon is completely destroyed without residues. After having entered into the liquid 13 of the absorption layer 10, the laser irradiation 6 is gradually absorbed as a function of the extinction coefficient of the liquid 13. The spatial absorption range extends into the absorption layer 10, so that an excessively high temperature rise does not take place immediately behind the transmission layer 9. By the reflection layer 11, non-absorbed laser irradiation 6 is reflected back into the absorption layer 10. In particular, the reflection layer 11 is designed as a hollow profile. A cooling device 18 is arranged in the circulation 14 to dissipate the heat taken up by the liquid 13.

For example, the transmission layer 9 is made of a quartz glass. As a liquid water is used to which iron oxide is admixed in order to increase its absorptivity. The reflection layer 11 is formed of an aluminium hollow profile. The sacrificial layer 12 consists, for example, of paper or molleton.

The depicted laser protective wall 1 is suitable for high-performance lasers emitting light in the near infrared range.

Fig. 2 shows a schematic cross-section of a laser protective wall 20 according to a further embodiment of the invention. Identical parts are identified by the same reference numbers as in Fig.1.

In contrast to the laser protective wall 1 according to Fig. 1, the layer sequence 3 of the laser protective wall 20 includes an absorption layer 10 and a cooling layer 21. The absorption layer 10 and the cooling layer 21 are separated from each other by a reflection layer 11. The absorption layer 10 and the cooling layer 21 both are formed of a liquid 13 flowing parallel in the flow direction shown during operation. The liquid 13 used in the laser protective wall 20 has a lower extinction coefficient than the liquid 13 used in the laser protective wall 1. In the case of water, this is achieved by reducing or completely omitting the iron-oxide content. Accordingly, the laser irradiation 6 now penetrates deeper into the absorption layer 10 and hits the reflection layer 11. The heat developing there is, however, efficiently dissipated by the flowing liquids 13 of the absorption layer 10 and the cooling layer 21.

A boarder layer 22 is provided as a rear boarder wall. In this case, the boarder layer 22 does not have to be designed as a hollow profile, but, when indicated, has to be constructed thermally insulating. The laser irradiation 6 is blocked at the upstream reflection layer 11.

In contrast to the laser protective wall 1, the laser protective wall 20 has the advantage that a heat increase does not take place in the absorption layer 10 immediately behind the transmission layer 9. Therefore, the thermal stress at the transmission layer 9 is lower.

The sacrificial layer 12 is spaced apart from the transmission layer 9 in order to enable an easier accessibility to the transmission layer 9.

The sacrificial layer 12, in this case, is made of paper or molleton, too. The transmission layer 9 is made, for example, from a quartz glass. The reflection layer 11 is designed as an aluminium plate with a microstructuring on the side facing towards the laser source 5. The boarder layer 22, is formed of an aluminium plate, too.

For both laser protective walls 1, 20, safety tests with laser irradiation up to 8 kW have been performed. In no case the layer sequence was completely penetrated. Moreover, at the laser protective wall 20 no damage to or failure of any component was registered.

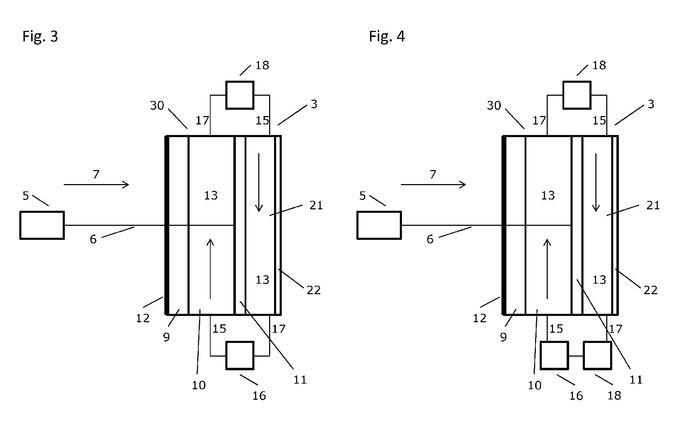

The laser protective wall 30 according to Fig. 3 differs from the laser protective wall 20 according to Fig. 2 in that the flow of the liquids 13 through the absorption layer 10 and the cooling layer 21 is antiparallel during operation, i.e. the absorption layer 10 and the cooling layer 21 are serially connected with regard to the circulation 14. In this embodiment the cooling device 18 is arranged between the outlet 17 of the absoption layer 10 and the inlet 15 of the cooling layer 21 and the pump 16 is arranged between the outlet 17 of the cooling layer 21 and the inlet 15 of the absorption layer 10.

The laser protective wall 30 shown in Fig. 4 comprises a further cooling device 18,which is arranged between the outlet 17 of the cooling layer 21 and the inlet 15 of the absorption layer 10.

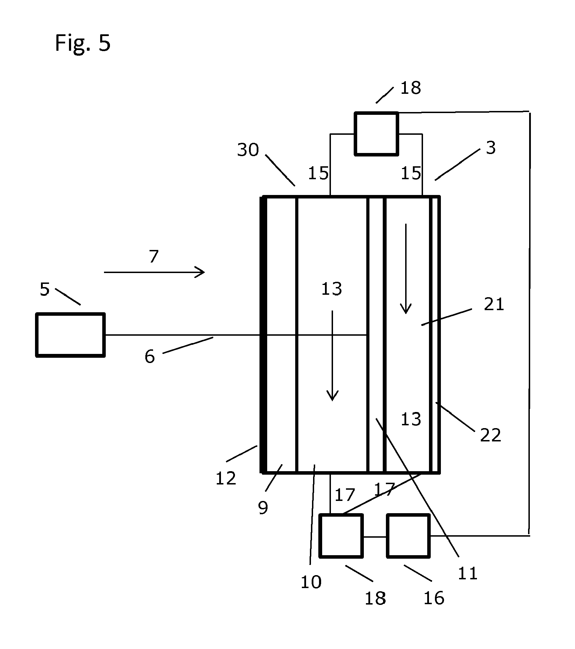

In the laser protective wall 30 according to Fig. 5 the absorption layer 10 and the cooling layer 21 are connected parallel.

### List of reference numbers

- 1: Laser protective wall
- 3: Layer sequence
- 5: Laser source
- 6: Laser beam
- 7: Longitudinal direction
- 9: Transmission layer
- 10: Absorption layer
- 11: Reflection layer
- 12: Sacrificial layer
- 13: Liquid
- 14: Circulation
- 15: Inlet
- 16: Pump
- 17: Outlet
- 18: Cooling device
- 20: Laser protective wall
- 21: Cooling layer
- 22: Boarder layer
- 30: Laser protective wall

## Claims

1. A laser protective wall (1, 20, 30) with a layer sequence (3) oriented along a longitudinal direction (7), comprising a transmission layer (9) on the entry side, followed by an absorption layer (10) and a reflection layer (11), wherein the absorption layer (10) is formed of a flowing liquid (13) during operation.

2. The laser protective wall (1, 20, 30) of claim 1,
wherein, viewed in longitudinal direction (7), the transmission layer (9) and the reflection layer (11) form a front boarder wall and a rear boarder wall, respectively, for said liquid (13).

3. The laser protective wall (1, 20, 30) of claim 1 or 2,
further comprising a pump (16) for generating a flow of or within said liquid (13) and/or further comprising means (e.g. 18) for cooling said liquid (13).

4. The laser protective wall (1, 20, 30) of any of the preceding claims,
wherein said liquid (13) is guided within a circulation (14).

5. The laser protective wall (1, 20, 30) of any of the preceding claims,
wherein, viewed in longitudinal direction (7), a sacrificial layer (12) is arranged in front of the transmission layer (9).

6. The laser protective wall (1, 20, 30) of claim 5,
wherein the sacrificial layer (12) is spaced apart from the transmission layer (9).

7. The laser protective wall (1, 20, 30) of any of the preceding claims,
wherein, viewed in longitudinal direction (7), a cooling layer (21) formed of a flowing liquid (13) during operation is arranged behind the reflection layer (11).

8. The laser protective wall (1, 20, 30) of claim 7,
wherein the absorption layer (10) and the cooling layer (21) are formed of liquids (13) flowing in the same direction and/or in opposite directions during operation.

9. The laser protective wall (1, 20, 30) of claim 7 or 8,
wherein the same liquid (13), in particular water, is used for forming the absorption layer (10) and the cooling layer (21) during operation.

10. The laser protective wall (1, 20, 30) of claim 9,
wherein said liquid (13) forming the absorption layer (10) and the cooling layer (21) is guided within a common circulation (14).

11. The laser protective wall (1, 20, 30) of any of claims 7 to 10,
wherein, viewed in longitudinal direction (7), a boarder layer (22), in particular a reflective boarder layer (22), is arranged behind the cooling layer (21).

12. The laser protective wall (1, 20, 30) of any of the preceding claims,
wherein the reflection layer (11) is microstructured on its front side facing towards the laser source (3) in order to increase its diffusion capacity.

13. The laser protective wall (1, 20, 30) of any of the preceding claims,
wherein in the absorption layer (10) and/or in the cooling layer (21) water is used as said liquid (13), and wherein preferably an additive, in particular an absorptive additive or a mixture of such absorptive additives, is admixed to the water.

14. The laser protective wall (1, 20, 30) of any of the preceding claims,
wherein a metal plate, in particular an aluminium plate, is used as reflection layer (11).

15. The laser protective wall (1, 20, 30) of any of the preceding claims,
wherein a quartz glass is used as transmission layer (9).

16. The laser protective wall (1, 20, 30) of any of claims 5 to 15,
wherein the sacrificial layer (12) consists of paper or molleton.
